# EUROPÄISCHE PATENTANMELDUNG

(11) **EP 4 033 117 A1**
(43) Veröffentlichungstag der Anmeldung: **27.07.2022**
(21) Anmeldenummer: 21211973.9
(22) Anmeldetag: 02.12.2021
(51) Int. Cl.: F16F 9/54, B60G 13/00

(54) **DÄMPFER FÜR EINE LUFTFEDER**

(30) Priorität: 08.01.2021 DE 102021100226
(71) Anmelder: Vibracoustic SE, 64293 Darmstadt (DE)
(72) Erfinder: Rose, David, 22159 Hamburg (DE); Werner, Philipp, 21339 Lüneburg (DE)
(74) Vertreter: Patentanwälte Olbricht Buchhold Keulertz

(57) **Zusammenfassung**

Vorgeschlagen wir ein Dämpfer, umfassend eine Anbindungsstruktur (4) und eine mit der Anbindungsstruktur (4) über eine Verbindung (8) verbundene Dämpferstange (6), wobei die Verbindung (8) mittels eines Schließrings (10) hergestellt ist.

## Beschreibung

Die Erfindung betrifft einen Dämpfer für eine Luftfeder gemäß dem Oberbegriff von Anspruch 1, sowie die Verwendung gemäß Anspruch 10.

Ein Dämpfer oder Schwingungsdämpfer der eingangs genannten Art wird in einem Fahrwerk eines Fahrzeugs eingesetzt, um die von den Fahrbahnunebenheiten hervorgerufenen Schwingungen zu bedämpfen. Hierzu ist es bekannt, den Dämpfer über ein sogenanntes Domlager oder Federbeinstützlager mit der Fahrzeugkarosserie zu verbinden. Das Federbeinstützlager ermöglicht eine schwingungstechnische Entkopplung des Federbeins oder des Schwingungsdämpfers relativ zu der Fahrzeugkarosserie und gleicht einen Winkelversatz des Dämpfers zu der Fahrzeugkarosserie, insbesondere Kardanikwinkel aus. Das Federbeinstützlager beinhaltet üblicherweise ein Gummimetalllager sowie ein Gehäuse. Dieses Gummimetalllager befindet sich in der Regel in einer Lageraufnahme, dem Gehäuse eines Federbeinstützlagers, welches mit der Fahrzeugkarosserie verschraubt wird.

Zur Befestigung des Dämpfers an der Fahrzeugkarosserie wird die Dämpferstange mit dem Kern des Gummimetalllagers verschraubt. Diese Verschraubung erfolgt in der Regel am oberen Ende der querschnittlich runden, hochpräzisen und häufig gehärteten Dämpferstange. Da die Verschraubung lösbar ist, ist ein missbräuchliches Lösen der Verschraubung und ein Austausch des Federbeinstützlagers gegen ein Plagiat nicht nachweisbar. Es kann zu ungerechtfertigten Schadensersatzforderungen kommen.

Die Verschraubung der Dämpferstange mit dem Kern des Gummimetalllagers und somit mit dem Federbeinstützlager ist grundsätzlich eine Herausforderung, da es schwierig ist, die Dämpferstange während ihrer Montage gegen Rotation um ihre Zentrallängsachse zu fixieren, um ein definiertes Anzugsmoment bei der Verschraubung aufzubringen. Beispielsweise können Schlüsselflächen an der Dämpferstange angebracht werden, jedoch schwächen diese den Durchmesser. Alternativ können stirnseitig in die Dämpferstange Fixierstrukturen, beispielsweise ein Innensechskant, eingebracht werden. Dieses wiederum können dazu führen, dass der Durchmesser der Dämpferstange größer als für den Betrieb notwendig ausfallen muss. Rotationsverhindernde Elemente oder Ausnehmungen sind somit nachteilig.

Die Verwendung einer Verschraubung ist zudem mit großen Toleranzen bezüglich der Vorspannkraft verbunden. Zur Erreichung einer Mindestvorspannkraft muss daher eine große Sicherheit berücksichtigt werden, welche ebenfalls zu einem großen Dämpferstangendurchmesser führt. Ein großer Dämpferstangendurchmesser wiederum führt beispielsweise in einem Zweirohrdämpfer zu einer großen Volumenverdrängung im Innenrohr. Bei gegebenem Außenrohrdurchmesser führt dieses zu einer größeren Hubdynamik der äußeren Fluidsäule und somit zu einer größeren Gefahr des Aufschäumens des Fluides, welches wiederum zu einer Beeinträchtigung der Dämpferkennlinie führt.

Aufgabe der Erfindung ist es daher, einen Dämpfer zu schaffen, welcher eine einfache, sichere und nicht zerstörungsfrei lösbare Fixierung der Dämpferstange mit einem Federbeinstützlager ermöglicht und ein Fluidaufschäumen sicher verhindert.

Hauptmerkmale der Erfindung sind im kennzeichnenden Teil von Anspruch 1 und in Anspruch 10 angegeben. Ausgestaltungen sind Gegenstand der Ansprüche 2 bis 9.

Erfindungsgemäß wird ein Dämpfer vorgeschlagen, umfassend eine Anbindungsstruktur und eine mit der Anbindungsstruktur über eine Verbindung verbundene Dämpferstange, wobei die Verbindung mittels eines Schließrings hergestellt ist.

Der Dämpfer, der ein Luftfederdämpfer oder ein Federbein sein kann, überwindet dadurch in überraschend einfacher Weise die Probleme des Standes der Technik. Der Schließring bildet mit der Dämpferstange eine form- und/oder kraftschlüssige Verbindung aus. Durch die Verwendung eines Schließrings können bei gegebenem Außenrohrdurchmesser des Dämpfers die erreichbaren axialen Vorspannkräfte deutlich erhöht werden. Gleichzeitig wird die bislang problematische Streuung der Vorspannkräfte im Vergleich zu einer Verschraubung verringert. So können beispielsweise mit einem Schließring die Vorspannkräfte einer größeren Standardverschraubung erreicht werden. Der Schließring als Befestigungsmittel kann also selbst kleiner ausfallen (Innendurchmesser und/oder Außendurchmesser und/oder axiale Höhe) als die bisher verwendete Außensechskantmutter als Befestigungsmittel zur Verschraubung. Die axiale Klemmkraft der Verbindung kann beispielsweise größer als 65 kN sein, größer als 90 kN oder größer als 115 kN sein.

Dadurch, dass nunmehr bei vergleichbaren Klemmkräften ein kleinerer Dämpferstangendurchmesser ermöglicht ist, kann die Hubdynamik der Fluidsäule reduziert werden, was die Verschäumneigung des Fluides insbesondere bei Zweirohrdämpfern erheblich reduziert. Jedoch auch bei Einrohrdämpfern führt ein kleinerer Dämpferstangendurchmesser zu einer Verringerung des durch das Eintauchen zusätzlichen Volumens und damit zu einer Beruhigung des Gesamtsystems.

In überraschender Weise führt die Ausbildung einer Schließringverbindung zwischen der Dämpferstange und einer Anbindungsstruktur durch die damit verbundene Reduktion des Dämpferstangendurchmessers zu einer erheblich verbesserten Dämpfercharakteristik durch die Reduktion der Neigung zum Verschäumen des Dämpferfluides.

Gemäß einer Ausgestaltung des Dämpfers nach der Erfindung kann die Dämpferstange einends vorzugsweise integral ausgebildete Schließrillen aufweisen, welche mit dem Schließring eine form- und/oder kraftschlüssige Verbindung ausbilden. Die Schließrillen können einstückig mit der Dämpferstange ausgebildet sein. Die Schließrillen können planparallel zueinander angeordnet sein bzw. keine Steigung aufweisen, wie beispielsweise ein Gewinde. Dies verhindert ein ungewolltes Abdrehen des Schließrings. Die Schließrillen können jeweils ringförmig ausgebildet sein. Die Schließrillen der Schließringverbindung sind somit bereits bei Herstellung der Dämpferstange ausbildbar.

Die Dämpferstange kann einends vorzugsweise integral ausgebildete Greifrillen aufweisen, welche von einem Setzwerkzeug gegriffen werden können. Die Greifrillen können einstückig mit der Dämpferstange ausgebildet sein. Die Greifrillen können planparallel zueinander angeordnet sein bzw. keine Steigung aufweisen, wie beispielsweise ein Gewinde. Die Greifrillen der Schließringverbindung sind somit bereits bei Herstellung der Dämpferstange ausbildbar. Denkbar ist jedoch auch, dass keine Greifrillen vorhanden sind und das Setzwerkzeug die Schließrillen greift.

Die Dämpferstange und der Schließring stehen nach dem Setzen in einer Form- und/oder kraftschlüssiger Verbindung. Das Setzten kann für Dämpferstangen mit Abreißteil folgendermaßen durchgeführt werden. Auf der unverformten Dämpferstange wird der Schließring im Bereich der Setzrillen angeordnet und gegebenenfalls an definierter Stelle positioniert. Sodann wird ein Setzwerkzeug aufgesetzt, welches die Dämpferstange an den Greifrillen greifen kann und sich auf dem Schließring abstützt. Durch das Anziehen des Abreißteils werden die Fügeteile (Dämpferstange und Schließring) zusammengepresst und der Schließring in die Schließrillen der Dämpferstange eingeformt. Ein eventueller Spalt zwischen Schließring und dem Bauteil, an welchem dieser anliegt, wird geschlossen. Bei einer definierten Kraft beginnt die Verformungshülse des Werkzeuges den Schließring in die Schließrillen der Dämpferstange plastisch einzuformen. Weiteres Stauchen verlängert den Schließring und damit axial auch die Dämpferstange und erzeugt eine genaue Vorspannkraft. Der Fügevorgang ist abgeschlossen, wenn das Setzwerkzeug auf einer Fügeteiloberfläche, beispielsweise auf einer Anlagefläche der Anbindungsstruktur, auftrifft und durch die ansteigende Zugspannung in der Dämpferstange das Abreißteil an der Sollbruchstelle abtrennt. Eine Sicherung der Dämpferstange gegen Rotation erfolgt während des Verbindens nicht.

Das Setzten kann für Dämpferstangen ohne Abreißteil folgendermaßen durchgeführt werden. Auf der unverformten Dämpferstange wird der Schließring im Bereich der Schließrillen angeordnet und gegebenenfalls an definierter Stelle positioniert. Sodann wird ein Setzwerkzeug aufgesetzt, welches die Dämpferstange an den Schließrillen oder Greifrillen greifen kann und sich auf dem Schließring abstützt. Durch das Anziehen der Dämpferstange werden die Fügeteile (Dämpferstange und Schließring) zusammengepresst und der Schließring in die Schließrillen der Dämpferstange eingeformt. Ein eventueller Spalt zwischen Schließring und dem Bauteil, an welchem dieser anliegt, wird geschlossen. Bei einer definierten Kraft beginnt die Verformungshülse des Werkzeuges den Schließring in die Schließrillen der Dämpferstange plastisch einzuformen. Weiteres Einformen oder Stauchen verlängert den Schließring und damit axial auch die Dämpferstange und erzeugt eine genaue Vorspannkraft. Wenn das plastische Einformen des Schließringes in die Schließrillen der Dämpferstange beendet ist, drückt sich das Setzwerkzeug vom gesetzten Schließring und/oder der Dämpferstange ab. Eine Sicherung der Dämpferstange gegen Rotation während des Verbindens erfolgt auch hier nicht.

Gemäß einer Ausgestaltung des Dämpfers nach der Erfindung kann die Dämpferstange einen durchmesserverringernden Stufenabschnitt aufweisen, sowie einen Schaftabschnitt zwischen Stufenabschnitt und Schließring, wobei die Anbindungsstruktur am Schaftabschnitt angeordnet ist und dort zwischen Schließring und Stufenabschnitt kraft- und/oder formschlüssig festgelegt ist. Der Schaftabschnitt kann gegenüber einem unmittelbar benachbarten Abschnitt der Dämpferstange durchmesserverringert sein. An dem Schaftabschnitt kann die Anbindungsstruktur angeordnet sein. Der Schaftabschnitt kann glatt sein und/oder zumindest abschnittsweise Schließrillen aufweisen. Auf dem Schaftabschnitt kann die Anbindungsstruktur aufgesteckt oder verpresst sein.

Gemäß einer denkbaren Ausgestaltung des Dämpfers nach der Erfindung kann die Anbindungsstruktur der Kern eines Gummilagers sein, der einen Elastomerkörper umfasst. Denkbar ist, dass die Anbindungsstruktur aus einem Metall oder einem Kunststoff gebildet ist.

Gemäß einer Ausgestaltung des Dämpfers nach der Erfindung kann ein von dem Schließring geklemmtes Element aus einem Kunststoff gebildet sein wie beispielsweise die Anbindungsstruktur. Weiterer Vorteil der Erfindung ist nämlich, dass auch geklemmte Elemente aus Kunststoff mit einbezogen werden können und/oder Elemente aus verschiedenen Materialien sicher und dauerfest miteinander verklemmt werden können. Hingegen kann es bei einem Setzen von verschraubten Bauteilen zu einem Lösen der Verschraubung kommen. Diese Gefahr besteht bei dem Schließring nicht, da dieser selbst unter Verlust der Vorspannkraft durch Setzen eine sichere Verbindung gewährleistet, auch bei Kunststoffteilen. Durch die Verwendung eines Schließringbolzens können auch Aufnahmestrukturen und/oder Bauteile aus Kunststoffen innerhalb des Kraftflusses der Vorspannkraft denkbar sein. Selbst ein Setzen dieser im Kraftfluss liegenden Kunststoffteile und die damit verbundene Reduktion der Vorspannkraft kann nicht zu einem Lösen der Verbindung, beispielsweise dem Lösen der Verschraubung führen, da die Verbindung unlösbar und damit unempfindlich gegen Vorspannkraftreduktion ist.

Gemäß einer Ausgestaltung des Dämpfers nach der Erfindung kann die Anbindungsstruktur auf gegenüberliegenden Seiten angeordnete Anlageflächen und eine Durchgriffsöffnung für die Dämpferstange aufweisen, wobei die Anbindungsstruktur vorzugsweise von einem Elastomerkörper gelagert ist, wobei sich der Schließring vorzugsweise unmittelbar gegen eine der beiden Anlageflächen abstützt. Die Durchgriffsöffnung kann sich in Längsrichtung des Dämpfers erstrecken. Die Anbindungsstruktur kann zumindest in Ihrem Anbindungsbereich eben oder scheibenförmig ausgebildet sein. Eine der Anlageflächen kann sich gegen den Stufenabschnitt oder die Stufe abstützen. Das Abstützen kann unmittelbar erfolgen. Gegen eine der Anlageflächen oder die andere Anlagefläche stützt sich der Schließring ab. Das Abstützen kann unmittelbar erfolgen, es können aber auch weitere Elemente wie beispielsweise Unterlegscheiben oder Hülsen im Kraftfluss angeordnet sein. Die Anlageflächen können in Längsrichtung an gegenüberliegenden Seiten der Anbindungsstruktur angeordnet sein.

Gemäß einer Ausgestaltung des Dämpfers nach der Erfindung kann die Verbindung eine Schließringverbindung mit Sollbruchstelle oder ohne Sollbruchstelle sein. Der Typ mit Sollbruchstelle umfasst neben den Schließrillen auch axial benachbart angeordnete Greifrillen. Der Typ ohne Sollbruchstelle umfasst zumindest Schließrillen. Gerade letzter Typ ist erheblich weniger empfindlich gegen Korrosion, da eine solche Verbindung keine Bruchfläche an der Stelle aufweist, an welcher bei dem Setzen des Schließrings das Abreißteil abgerissen wird.

Gemäß einer Ausgestaltung des Dämpfers nach der Erfindung kann die Dämpferstange an ihrem die Verbindung aufweisenden Ende innerhalb eines von einer Aufnahme gebildeten Aufnahmeraums angeordnet sein und einen axialen Stirnbereich der Aufnahme nicht überragen. Die Aufnahme kann Teil eines Federbeinstützlagers sein. Bislang steht die Dämpferstange über den axialen Stirnbereich der Aufnahme heraus. Da nun kein Werkzeug mehr verwendet werden muss, um eine Rotation zu verhindern, kann auf den Überstand verzichtet werden. Denkbar ist auch, dass das Ende der Dämpferstange gegenüber dem axialen Stirnbereich der Aufnahme zurückspringt. Dadurch ist erheblich weniger Bauraum nötig. Unerheblich ist, falls das Abreißteil vor dem Setzen den axialen Stirnbereich der Aufnahme überragt, da dieser beim Setzen abgerissen wird und dann die Bruchfläche innerhalb des Aufnahmeraums angeordnet ist.

Gemäß einer Ausgestaltung des Dämpfers nach der Erfindung kann die Dämpferstange frei von Fixierungsausnehmungen sein, die zur Verhinderung einer Rotation um die Zentrallängsachse dienen. Die Verhinderung bezieht sich auf ein Befestigen der Dämpferstange an der Anbindungsstruktur. Die Fixierungsausnehmungen können eine Rotation dadurch verhindern, dass dort beispielsweise rotationsverhindernde Werkzeuge eingeführt oder angesetzt werden können. Solche Fixierungsausnehmungen sind beispielsweise im Stand der Technik notwendig, wenn statt eines Schließringes eine Mutter zur Befestigung der Dämpferstange am Federbeinstützlager verwendet wird. In dem Fall wird das durch den Verschraubungsprozess der stirnseitigen Mutter in die Dämpferstange eingebrachte Moment durch Schlüsselflächen an der Mantelfläche der Dämpferstange oder durch einen Innensechskant auf der Stirnseite der Dämpferstange abgeführt. Beides führt zu einer Schwächung der Dämpferstange, so dass diese im Durchmesser größer ausgeführt werden muss, als bei einem Verzicht auf Fixierungsausnehmungen.

Gemäß einer Ausgestaltung des Dämpfers nach der Erfindung kann der Schließring eine Prägung und/oder Originalitätsprägung aufweisen. Zwar kann mit Hilfe eines Spezialwerkzeuges der Schließring von der Dämpferstange gelöst und anschließend wieder mit einem neuen plastisch verformbaren Schließring fixiert werden. Es besteht jedoch die Möglichkeit, beim Anpressen eines Schließrings auf die Dämpferstange eine Prägung in diesen mit einzubringen. Diese Prägung sichert die prozesskonforme Fixierung des Schließrings auf der Dämpferstange durch den Originalhersteller. Ist die Prägung zumindest abschnittsweise komplexer, schwierig zu kopierender Geometrie, dient sie gleichzeitig als Kopierschutz und schützt damit vor ungerechtfertigten Ansprüchen, die durch die Montage von Plagiaten, insbesondere von Plagiaten von Federbeinstützlagern entstehen. Zudem kann eine Schließringverbindung nicht zerstörungsfrei gelöst werden, wodurch ein Plagiatseinbau erheblich erschwert und einfacher erkennbar ist.

Erfindungsgemäß wird zudem eine Verwendung eines Schließrings in einem Dämpfer zur Fixierung einer Dämpferstange an einer Anbindungsstruktur vorgeschlagen. Durch die Verwendung kann ein offenbarungsgemäßer Dämpfer ausgebildet werden. Die bereits oben bezüglich des Dämpfers beschriebenen Vorteile ergeben sich analog auch für die Verwendung, worauf hiermit verwiesen wird.

Denkbar ist zudem eine Dämpferbaugruppe, umfassend einen offenbarungsgemäßen Dämpfer und ein Federbeinstützlager, wobei dann die Anbindungsstruktur und der Elastomerkörper Teile des Federbeinstützlagers sind bzw. das Federbeinstützlager umfasst die Anbindungsstruktur und den Elastomerkörper.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

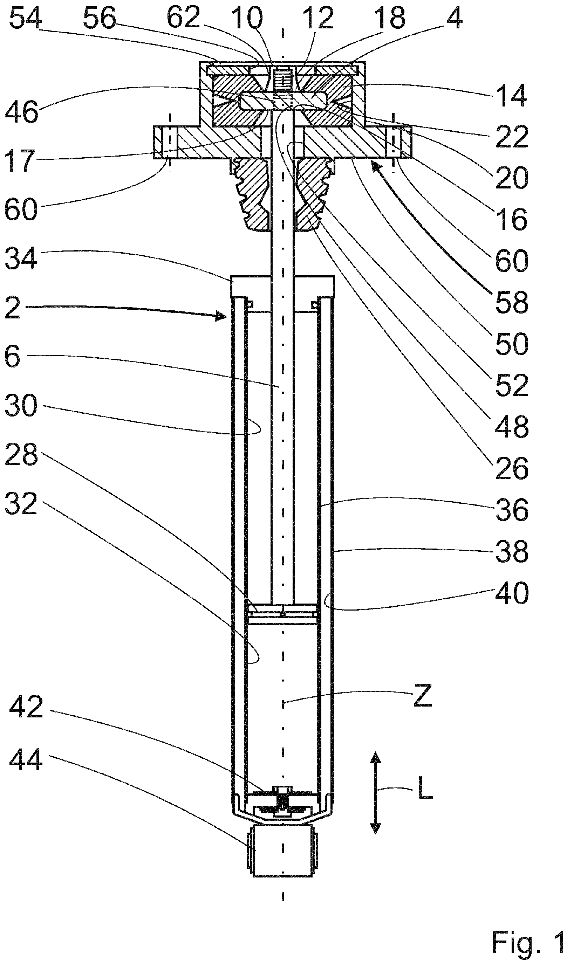

- Fig. 1: eine Längsschnittansicht auf eine Ausführungsform eines erfindungsgemäßen Dämpfers und

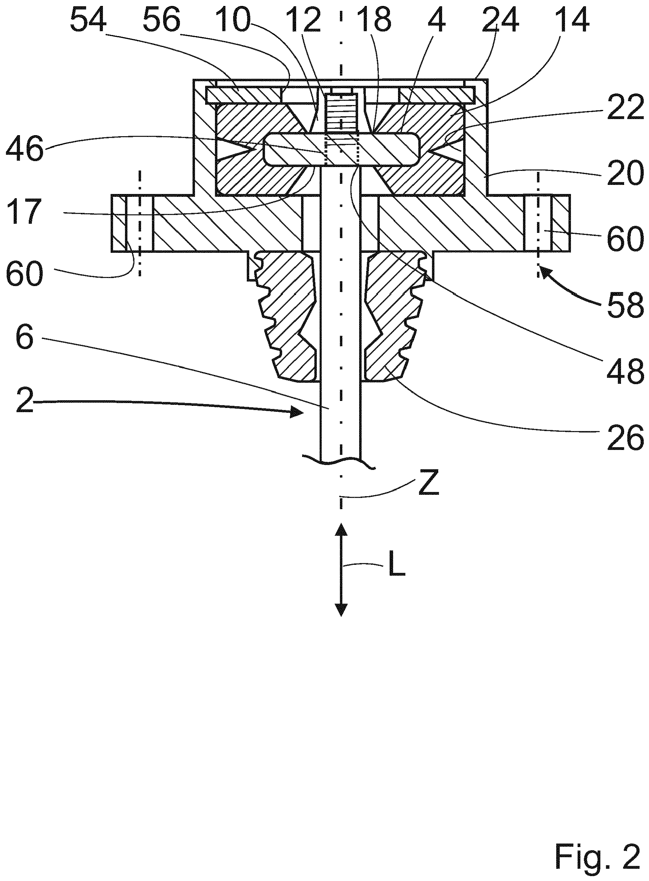

- Fig. 2: eine Detailansicht des Dämpfers nach Fig. 1.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Figuren zeigen einen Dämpfer 2, der als Zweirohrdämpfer ausgebildet ist, jedoch ist die Erfindung gleichermaßen auch auf andere Dämpfertypen wie beispielsweise Einrohrdämpfer anwendbar. Durch den Dämpfer 2 erstreckt sich eine Zentrallängsachse Z in Längsrichtung L.

Der Dämpfer 2 umfasst ein inneres Zylinderrohr 36, in welches sich entlang der Zentrallängsachse Z verstellbar eine Dämpferstange 6 erstreckt. An der Dämpferstange 6 ist ein an der Innenwand des inneren Zylinderrohrs 36 geführter und gegen diese abdichtender Kolben 28 angeordnet. Der Kolben 28 unterteilt das innere Zylinderrohr 36 in eine erste Arbeitskammer 30 und eine zweite Arbeitskammer 32, die jeweils mit einem Druckmedium, wie beispielsweise einem Hydrauliköl, gefüllt sind. Zur Begrenzung der ersten Arbeitskammer 30 ist das Zylinderrohr 36 durch eine Dämpferstangenführung 34 verschlossen, die an einem Stirnende des Zylinderrohrs 36 befestigt ist. Die Dämpferstangenführung 34 weist eine Öffnung für die Dämpferstange 6 auf. Zudem kann an der Dämpferstangenführung 34 im Bereich der Dämpferstange 6 eine nicht näher dargestellte Gleitdichtung vorgesehen sein. Die zweite Arbeitskammer 32 ist axial durch ein Ventil 42 begrenzt, welches in fluidleitender Verbindung mit einer Ausgleichskammer 40 steht, das an das andere Stirnende des inneren Zylinderrohrs 36 angesetzt ist.

Das innere Zylinderrohr 36 ist mit der Dämpferstangenführung 34 und dem Ventil 42 in einem äußeren Zylinderrohr 38 angeordnet. Dabei wird zwischen der Außenwand des inneren Zylinderrohrs 36 und der Innenwand des äußeren Zylinderrohrs 38 die Ausgleichskammer 40 gebildet, die sich zwischen der Dämpferstangenführung 34 und dem Ventil 42 erstreckt. An dem äußeren Zylinderrohr 38 ist eine Befestigungsstruktur 44 angeordnet, beispielsweise ein Aufnahmeauge für ein Elastomerlager.

Am gegenüberliegenden Ende ist der Dämpfer mit einem Federbeinstützlager 58 verbunden. Das Federbeinstützlager 58 umfasst eine Aufnahme 20, die einen Aufnahmeraum 22 und eine erste Wandung 50 umfasst. Die erste Wandung 50 bildet einen Flanschabschnitt mit Bohrungen 60 zur Festlegung des Federbeinstützlagers 58 an einer Karosserie aus. Die erste Wandung 50 weist zudem eine erste Durchgriffsöffnung 52 auf, durch welche die Dämpferstange 6 in den Aufnahmeraum 22 einragt. An der in Längsrichtung L gegenüberliegenden Seite des Aufnahmeraums 22 ist eine zweite Wandung 54 als separates Teil zur Aufnahme 20 angeordnet. Die Zweite Wandung 54 ist deckelartig von der Aufnahme 20 gehalten und weist eine zweite Durchgriffsöffnung 56 mit einem Durchmesser auf. In dem Aufnahmeraum 22 ist eine Anbindungsstruktur 4 des Federbeinstützlager 58 angeordnet und teilweise in einen lagernden Elastomerkörper 14 einvulkanisiert. Die Anbindungsstruktur 4 und der Elastomerkörper 14 sind Teile des Federbeinstützlagers 58 und bilden ein Gummilager aus. Die Anbindungsstruktur 4 ist scheiben- oder plattenförmig ausgebildet, sie kann aber auch jede andere Geometrie ausbilden, die zur Einstellung der Lagercharakteristik notwendig ist. Die Anbindungsstruktur 4 bildet hier den Kern des Gummilagers. Der Elastomerkörper 14 liegt an den Wandungen 50, 52 und der Aufnahme 20 an.

Die Anbindungsstruktur 4 weist eine punktliniert dargestellte Durchgriffsöffnung 48 oder dritte Durchgriffsöffnung auf, durch welche die Dämpferstange 6 über einen Schaftabschnitt 46 ragt. Die Anbindungsstruktur 4 liegt einerseits über eine Anlagefläche 17 an einer Stufe an, die von einem Stufenabschnitt 16 der Dämpferstange 6 ausgebildet ist. Gegen diese Stufe wird die Anbindungsstruktur 4 von einem Schließring 10 gepresst, der gegen eine in Längsrichtung L gegenüberliegende Anlagefläche 18 der Anbindungsstruktur 4 anliegt. Intergral mit der Dämpferstange 6 sind umfangsseitig ringförmig verlaufende Schließrillen 12 für den Schließring 10 abgebildet, wobei die Figuren den gesetzten Schließring 10 zeigen. Der Schließring 10 bildet mit den Schließrillen 12 eine form- und/oder kraftschlüssige Verbindung 8 aus. Auf dem Schließring 10 erstreckt sich eine Originalitätsprägung 62.

Der Durchmesser der zweiten Durchgriffsöffnung 56 ist so bemessen, dass er ca. dem 2-fachen Außendurchmesser des Schließrings 10 vor dem Setzen entspricht und genug radialer Raum vorhanden ist, um ein Setzwerkzeug durch die Durchgriffsöffnung 56 zu führen und zu platzieren. Der Schließring 10 ist somit vollständig innerhalb des Aufnahmeraums 22 angeordnet. Zudem steht die Dämpferstange 6 an ihrem die Verbindung 8 aufweisenden Ende nicht in Längsrichtung L über einen Stirnbereich 24 der Aufnahme 22 hinaus.

Die Verstellbewegung des Dämpfers 2 in Längsrichtung L wird durch einen an der Aufnahme 20 angeordneten Puffer 26 begrenzt, gegen welchen die Dämpferstangenführung 34 anschlagen kann.

Erkennbar ist, dass Dämpferstange 6 frei von Fixierungsausnehmungen ist, die zur Verhinderung einer Rotation um die Zentrallängsachse Z dienen.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 2 | Dämpfer | 52 | Durchgriffsöffnung |
| 4 | Anbindungsstruktur | 54 | Wandung |
| 6 | Dämpferstange | 56 | Durchgriffsöffnung |
| 8 | Verbindung | 58 | Federbeinstützlager |
| 10 | Schließring | 60 | Bohrung |
| 12 | Schließrille | 62 | Originalitätsprägung |
| 14 | Elastomerkörper | | |
| 16 | Stufenabschnitt | L | Längsrichtung |
| 17 | Anlagefläche | Z | Zentrallängsachse |
| 18 | Anlagefläche | | |
| 20 | Aufnahme | | |
| 22 | Aufnahmeraum | | |
| 24 | Stirnbereich | | |
| 26 | Puffer | | |
| 28 | Kolben | | |
| 30 | erste Arbeitskammer | | |
| 32 | zweite Arbeitskammer | | |
| 34 | Dämpferstangenführung | | |
| 36 | inneres Zylinderrohr | | |
| 38 | äußeres Zylinderrohr | | |
| 40 | Ausgleichskammer | | |
| 42 | Ventil | | |
| 44 | Befestigungsstruktur | | |
| 46 | Schaftabschnitt | | |
| 48 | Durchgriffsöffnung | | |
| 50 | Wandung | | |

## Patentansprüche

1. Dämpfer, umfassend eine Anbindungsstruktur (4) und eine mit der Anbindungsstruktur (4) über eine Verbindung (8) verbundene Dämpferstange (6), **dadurch gekennzeichnet, dass** die Verbindung (8) mittels eines Schließrings (10) hergestellt ist.

2. Dämpfer nach Anspruch 1, **dadurch gekennzeichnet, dass** die Dämpferstange (6) einends vorzugsweise integral ausgebildete Schließrillen (12) aufweist, welche mit dem Schließring (10) eine form- und/oder kraftschlüssige Verbindung (8) ausbilden.

3. Dämpfer nach einem der vorangehenden Ansprüche, **dadurch gekennzeichnet, dass** die Dämpferstange (6) einen durchmesserverringernden Stufenabschnitt (16) aufweist sowie einen Schaftabschnitt (46) zwischen Stufenabschnitt (16) und Schließring (10), wobei die Anbindungsstruktur (4) am Schaftabschnitt (46) angeordnet ist und dort zwischen Schließring (10) und Stufenabschnitt (16) kraft- und/oder formschlüssig festgelegt ist.

4. Dämpfer nach einem der vorangehenden Ansprüche, **dadurch gekennzeichnet, dass** ein von dem Schließring (10) geklemmtes Element aus einem Kunststoff gebildet ist.

5. Dämpfer nach einem der vorangehenden Ansprüche, **dadurch gekennzeichnet, dass** die Anbindungsstruktur (4) auf gegenüberliegenden Seiten angeordnete Anlageflächen (17, 18) und eine Durchgriffsöffnung (48) für die Dämpferstange (6) aufweist, wobei die Anbindungsstruktur (4) vorzugsweise von einem Elastomerkörper (14) gelagert ist, wobei sich der Schließring (10) vorzugsweise unmittelbar gegen eine der beiden Anlageflächen (17, 18) abstützt.

6. Dämpfer nach einem der vorangehenden Ansprüche, **dadurch gekennzeichnet, dass** die Verbindung (8) eine Schließringverbindung mit Sollbruchstelle oder ohne Sollbruchstelle ist.

7. Dämpfer nach einem der vorangehenden Ansprüche, **dadurch gekennzeichnet, dass** die Dämpferstange (6) an ihrem die Verbindung (8) aufweisenden Ende innerhalb eines von einer Aufnahme (20) gebildeten Aufnahmeraums (22) angeordnet ist und einen axialen Stirnbereich (24) der Aufnahme (20) nicht überragt.

8. Dämpfer nach einem der vorangehenden Ansprüche, **dadurch gekennzeichnet, dass** die Dämpferstange (6) frei von Fixierungsausnehmungen ist, die zur Verhinderung einer Rotation um die Zentrallängsachse (Z) dienen.

9. Dämpfer nach einem der vorangehenden Ansprüche, **dadurch gekennzeichnet, dass** der Schließring (10) eine Prägung und/oder Originalitätsprägung (62) aufweist.

10. Verwendung eines Schließrings (10) in einem Dämpfer (2) zur Fixierung einer Dämpferstange (6) an einer Anbindungsstruktur (4).
